Europäisches Patentamt

European Patent Office

Office européen des brevets

(19)

(11) Numéro de publication: **0 232 806 B1**

(12) **FASCICULE DE BREVET EUROPEEN**

(45) Date de publication du fascicule du brevet: **08.08.90**

(51) Int. Cl.⁵: **H 01 M 6/32,** H 01 M 6/14

(21) Numéro de dépôt: **87101240.7**

(22) Date de dépôt: **29.01.87**

(54) Pile amorçable mettant en oeuvre le couple Li/SO₂Cl₂.

(30) Priorité: **04.02.86 FR 8601492**

(43) Date de publication de la demande:
**19.08.87 Bulletin 87/34**

(45) Mention de la délivrance du brevet:
**08.08.90 Bulletin 90/32**

(84) Etats contractants désignés:
**DE FR GB IT SE**

(56) Documents cités:
**EP-A-0 079 226
WO-A-85/01614
DE-A-2 607 749
DE-A-3 122 080
GB-A-2 056 752**

(73) Titulaire: **Société Anonyme dite SAFT
156, avenue de Metz
F-93230 Romainville (FR)**

(72) Inventeur: **Descroix, Jean-Pierre
16bis rue de Neuilly
F-94120 Fontenay Sous Bois (FR)**
Inventeur: **Danel, Véronique
2 rue Aristide Briand
F-93110 Rosny Sous Bois (FR)**
Inventeur: **Petit, André
5 allée de la Fontaine
F-93340 Le Raincy (FR)**

(74) Mandataire: **Weinmiller, Jürgen et al
Lennéstrasse 9 Postfach 24
D-8133 Feldafing (DE)**

Le dossier contient des informations techniques présentées postérieurement au dépôt de la demande et ne figurant pas dans le présent fascicule.

Courier Press, Leamington Spa, England.

## Description

La présente invention concerne les piles amorçables mettant en oeuvre le couple $Li/SO_2Cl_2$ destinées à assumer des décharges rapides à densités de courant élevées, de l'ordre de 100mA/$cm^2$.

On connaît des piles $Li/SOCl_2$ et $Li/SO_2Cl_2$ qui fonctionnent à de tels régimes.

Les piles $Li/SO_2Cl_2$ posent un problème qui n'existe pas pour les piles $Li/SOCl_2$, à savoir une forte polarisation de la cathode.

Pour y remédier, on peut mettre en oeuvre des cathodes contenant du platine ou des cathodes en charbon actif à grande surface spécifique. Ces solutions sont coûteuses ou difficiles à mettre en oeuvre sous forme de support poreux.

La présente invention a pour but de résoudre le problème précédent tout en conservant pour les cathodes des piles $Li/SO_2Cl_2$ une technologie analogue à celle des piles $Li/SOCl_2$.

L'article MURPHY, KREHL et LIANG paru dans Proc. 16th Intersoc. Energy Conversion Engineering Conf. (The American soc of Mechanical Engineers NY 1981 page 97) étudie l'effet de l'addition d'un halogène dans l'électrolyte d'une pile $Li/SO_2Cl_2$ non amorçable, et conclut à l'intérêt de l'addition de chlore dans $SO_2Cl_2$ en excluant les autres halogènes; selon cet article l'addition de chlore accroît les conditions de sécurité en cas d'utilisations à des températures comprises entre $-32°C$ et $+150°C$.

Dans le but d'améliorer les conditions de décharge des piles $Li/SO_2Cl_2$ amorçables, le demandeur a découvert que l'addition de chlore était sans intérêt mais que, par contre, une addition de brome dans l'électrolyte apportait des améliorations surprenantes. Car le brome y jouait un rôle de catalyseur et non de dépolarisant.

La présente invention a donc pour objet une pile amorçable mettant en oeuvre le couple $Li/SO_2Cl_2$, comportant d'une part dans un boîtier une pluralité d'éléments de pile connectés électriquement et comprenant chacun une anode de lithium, un séparateur, une cathode, et d'autre part un réservoir d'électrolyte et des moyens d'amorçage pour introduire dans ledit boîtier l'électrolyte qui sert également de matière active positive, caractérisée par le fait que ledit électrolyte contient en outre du brome, qui a une fonction de catalyseur, dans une proportion comprise entre 0,1 mole et 0,5 mole et mole par litre d'électrolyte, et de préférence comprise entre 0,2 et 0,5 mole/litre.

Le soluté est choisi parmi $AlCl_3$ ou $LiAlCl_4$, dans une proportion comprise de préférence entre 1 mole par litre et 4 moles par litre.

D'autres caractéristiques et avantages de la présente invention apparaîtront au cours de la description suivante d'un mode de réalisation donné à titre illustratif mais nullement limitatif.

Dans le dessin annexé:

La figure 1 est une vue schématique semi-coupée d'une pile amorçable selon l'invention.

La figure 2 est une vue éclatée en coupe de la pile de la figure 1 sans son dispositif d'amorçage.

La figure 3 montre les courbes de décharge U (volts) en fonction du temps t (min) d'une pile selon l'invention et d'autres piles ne faisant pas partie de l'invention.

La figure 4 montre plusieurs courbes de décharge U (volts) en fonction du temps t (min) pour plusieurs piles selon l'invention contenant différents pourcentages de brome dans leur électrolyte.

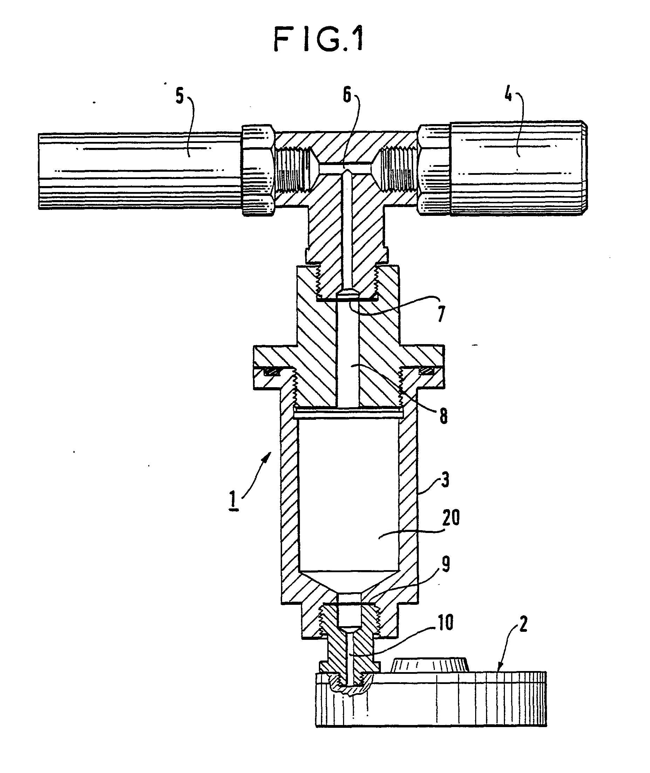

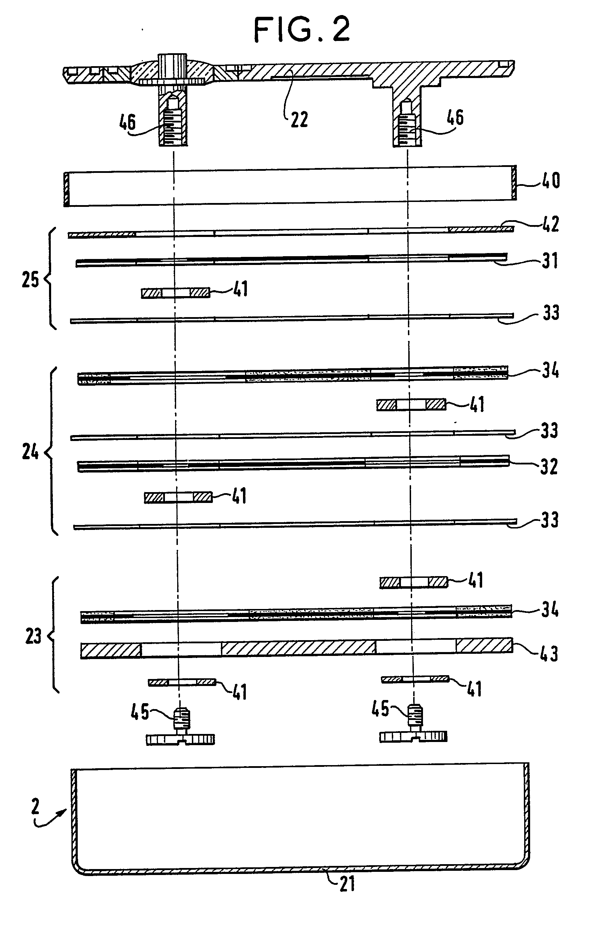

Dans la figure 1 est illustrée une pile 1 comportant un boîtier 2 contenant les différents éléments électrochimiques qui seront décrits plus loin à l'aide de la figure 2, un réservoir d'électrolyte 3 et un dispositif d'amorçage.

Ce dispositif d'amorçage comprend une arrivée d'argon sous pression 4 associée à un capteur de pression 5 et destinée à envoyer par la canalisation 6 de l'argon sous pression sur un opercule 7 qui se déchire et libère l'entrée 8 du réservoir d'électrolyte 3.

L'électrolyte 20 est chassé et, sous l'effet de sa pression, l'opercule 9 se déchire et l'électrolyte est introduit dans le boîtier 2 par la canalisation 10.

On voit dans la figure 2 le contenu du boîtier 2 de la pile 1 fermé par un couvercle 22. Le boîtier 2 comporte un empilage formé d'un demi-élément inférieur 23, de six éléments identiques à l'élément référencé 24 et d'un demi-élément supérieur 25.

Le demi-élément supérieur 25 comporte une anode simple en lithium 31 et un séparateur 33.

L'élément intermédiaire 24 comporte successivement une cathode 34, un séparateur 33, une double anode de lithium 32 et un séparateur 33. Le demi-élément inférieur comporte une cathode 34.

On a référencé 40 à 43 différentes cales ou entretoises en PTFE; des vis 45 sont destinées à coopérer avec des taraudages 46 prévus dans le couvercle 22.

L'empilage comporte au total:

7 cathodes, chacune présentant une épaisseur de 0,8 mm et étant constituée d'un collecteur de nickel électro-formé d'épaisseur 0,1 mm, revêtu de noir d'acétylène avec un liant tel que le polytétrafluoréthylène,

7 anodes de lithium d'épaisseur 0,35 mm, 13 séparateurs d'épaisseur 0,15 mm en fibres de verre.

Le diamètre des électrodes est de 64 mm.

La surface active de chaque élément est $3,5dm^2$.

Le volume d'électrolyte dans le boîtier est de $25cm^3$.

1er exemple (comparatif)

Le solvant d'électrolyte est $SO_2Cl_2$, le soluté est $LiAlCl_4$ dans une proportion de 3M par litre.

On décharge une telle pile de l'art antérieur à $20°C$ et avec une densité de courant de $6A/dm^2$.

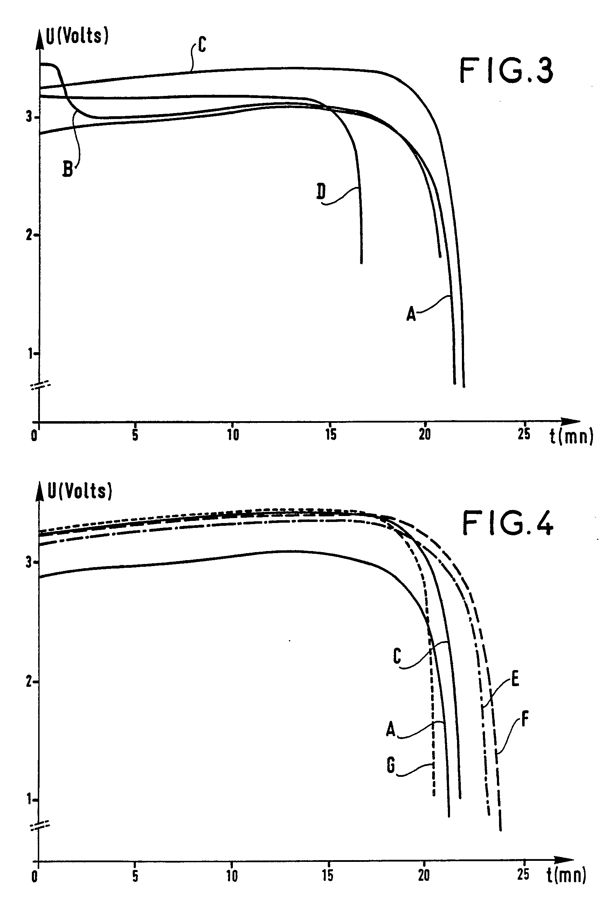

La courbe de décharge U (volts) en fonction du temps t (minutes) est la courbe A de la figure 3.

**2ème exemple (comparatif)**

On ajoute dans l'électrolyte du chlore dans une proportion de 0,5M par litre et l'on obtient la courbe B.

On observe l'effet fugitif du chlore au début de la décharge, puis la courbe B rejoint la courbe A de décharge de $SO_2Cl_2$ seul.

**3ème exemple (comparatif)**

Selon l'invention, on ajoute du brome dans l'électrolyte dans la proportion de 0,5M (courbe C).

L'amélioration de la courbe de décharge est très nette et peut être attribuée à un effet catalytique du brome.

**4ème exemple (comparatif)**

On remplace le brome du 3ème exemple par de l'iode (courbe D). On observe une légère amélioration de la courbe A au début de la décharge, mais dans l'ensemble les performances obtenues sont nettement inférieures à celles obtenues avec le brome.

**5ème à 7ème exemples**

On a modifié la concentration de brome dans l'électrolyte.

Dans la figure 4, on a reporté, les courbes A et C de la figure 3.

La courbe E correspond à une concentration de 0,1 M/litre.

La courbe F correspond à une concentration de 0,25 M/litre.

La courbe G correspond à une concentration de 1 M/litre (comparatif).

Dans tous les cas on observe une nette amélioration de la décharge par rapport aux performances des piles de l'art antérieur. Le rôle catalytique du brome est clairement démontré par l'exemple 5. En effet, dans cet exemple, 30cm³ d'électrolyte ($SO_2Cl_2$—$LiAlCl_4$ 3M—$Br_2$ 0,1M) ont été injectés dans l'élément. Cet élément a délivré 22 ampères pendant 22 minutes, soit une capacité de 8 Ah représentant 0,3 Faraday au palier à 3,2 volts.

La quantité de brome injectée ($0,1 \times 30/1000 = 0,003$ mole) représente seulement 0,006 Faraday.

Si le brome avait été consommé au lieu de jouer le rôle d'un catalyseur de la réduction de $SO_2Cl_2$, la capacité délivrée au palier à 3,2 volts aurait été limitée à 0,016 Ah, soit cinquante fois moins que la valeur obtenue.

Bien entendu l'invention n'est pas limitée aux exemples qui viennent d'être décrits. On pourra notamment modifier la structure de la pile et utiliser d'autres solutés.

**Revendications**

1. Pile amorçable mettant en oeuvre le couple $Li/SO_2Cl_2$, destinée à assumer des décharges rapides à densités de courant élevées, de l'ordre de 100mA/cm², comportant d'une part dans un boîtier une pluralité d'éléments de pile connectés électriquement et comprenant chacun une anode de lithium, un séparateur, une cathode, et d'autre part un réservoir d'électrolyte et des moyens d'amorçage pour introduire dans ledit boîtier l'électrolyte qui sert également de matière active positive, caractérisée par le fait que ledit électrolyte contient en outre du brome dans une proportion comprise entre 0,1 mole et 0,5 mole par litre d'électrolyte, et de préférence comprise entre 0,2 et 0,5 mole par litre, le brome ayant une fonction de catalyseur et non de dépolarisant, et que le soluté de l'électrolyte est choisi parmi $AlCl_3$ ou $LiAlCl_4$.

2. Pile amorçable selon la revendication 1, caractérisée par le fait que la concentration en sel électrolytique est comprise entre 1M et 4M par litre.

**Patentansprüche**

1. Aktivierbare Batterie auf der Basis des Elementenpaares $Li/SO_2Cl_2$ zur raschen Entladung bei hohen Stromdichten von etwa 100 mA/cm², die zum einen in einem Gehäuse eine Vielzahl von elektrisch miteinander verbundenen Batterieelementen aufweist, die je eine Lithiumanode, einen Separator und eine Kathode umfassen, und die zum anderen ein Elektrolysereservoir und Aktivierungsmittel zum Einleiten des Elektrolyts in das Gehäuse aufweist, wobei dieser zugleich als positive aktive Masse dient, dadurch gekennzeichnet, daß der Elektrolyt außerdem Brom in einer Menge von 0,1 bis 0,5 Mol pro Liter, vorzugsweise zwischen 0,2 und 0,5 Mol pro Liter enthält, wobei das Brom eine Katalysator- aber keine Depolarisatorfunktion besitzt und daß als gelöster Stoff $AlCl_3$ oder $LiAlCl_4$ gewählt wird.

2. Aktivierbare Batterie nach Anspruch 1, dadurch gekennzeichnet, daß die Konzentration an Elektrolytsalz zwischen 1M und 4M pro Liter liegt.

**Claims**

1. An activatable battery using the $Li/SO_2Cl_2$ couple for providing rapid discharges at high currency densities of about 100 mA/cm², the battery comprising firstly a housing 10 containing a plurality of electrically connected battery cells, each including a lithium anode, a separator, and a cathode, and secondly an electrolyte tank and activation means for filling said electrolyte into said housing, said electrolyte also serving as the positive active material, characterized in that the electrolyte additionally contains bromine at a concentration lying in the range 0.1 moles per liter to 0.5 mole per liter of electrolyte, and preferably lying in the range 0.2 moles/liter to 0.5 moles/liter, with the bromine acting as a catalyst and not as a depolarizer and the solute of the electrolyte is selected from $AlCl_3$ or $LiAlCl_4$.

2. An activatable battery according to claim 1, characterized in that the electrolyte salt concentration is in the range 1M to 4M per liter.

# FIG.1

# FIG. 2

FIG.3

FIG.4